# EUROPEAN PATENT SPECIFICATION

(11) **EP 1 229 452 B1**
(45) Date of publication and mention of the grant of the patent: **14.03.2007**
(21) Application number: 00966529.0
(22) Date of filing: 17.10.2000
(51) Int. Cl.: G06F 17/30, H04L 12/58, H04L 29/06

(54) **INFORMATION DISTRIBUTION SYSTEM, INFORMATION DISTRIBUTION METHOD, AND COMPUTER-READABLE MEDIUM STORING DISTRIBUTION PROGRAM**
INFORMATIONSVERTEILUNGSSYSTEM, -VERFAHREN UND DURCH RECHNER LESBARES MEDIUMSPEICHERVERTEILUNGSSYSTEM
SYSTEME, PROCEDE DE DIFFUSION D'INFORMATIONS ET PROGRAMME DE DIFFUSION A SUPPORT DE STOCKAGE LISIBLE SUR ORDINATEUR

(30) Priority: 18.10.1999 JP 29603499
(43) Date of publication of application: 07.08.2002
(73) Proprietor: Kabushiki Kaisha Eighting, Tokyo 140-0013 (JP)
(72) Inventor: Fujisawa, Tomonori c/o Kabushiki Kaisha Eighting, Tokyo 140-0014 (JP); Satou, Shouji, Kuroiso-shi, Tochigi 325-0000 (JP)
(74) Representative: HOFFMANN EITLE
(86) International application number: PCT/JP2000/007184
(87) International publication number: WO 2001/029675

(56) References cited:
- WO-A-97/32258
- JP-A- 11 003 348
- JP-A- 11 161 588
- US-A- 5 848 397
- PATENT ABSTRACTS OF JAPAN vol. 1999, no. 11, 30 September 1999 (1999-09-30) -& JP 11 161588 A (INTER KYUU KK), 18 June 1999 (1999-06-18)

## Description

### FIELD OF THE INVENTION

The present invention relates to an information distribution system making use of a network such as Internet for distribution of advertisements, news, and meteorological data, an information distribution method, and a computer-readable recording medium with the program for the method stored therein, and more specifically to an information distribution system provided with the instant messaging functions including distribution of advertisements, news and other types of information, an information distribution method for the system, and a computer-readable recording medium with the program for the method stored therein.

### BACKGROUND TECHNOLOGY

In association with explosive popularization of Internet, the "banner advertisement" is now very popular as an medium for advertisement through Internet in the United States where the Internet was invented and popularized first in the world. Also in the areas where the quantity-dependent communication fee system is dominant, in addition to growth of use of the "Electronic mail" which can be connected or disconnected within a short period of time, the "Electronic mail advertisement" is frequently utilized.

For instance, Japanese Patent Laid-Open Publication No. HEI 10-320314 discloses the electronic mail advertisement insertion system, in which an advertisement is inserted and the advertisement is transferred and received in association with transaction of the electronic mail. With the electronic mail advertisement insertion system, there is provided the advantage that the transmitting side is not required to insert an advertisement message into a body text or a signature section each time an electronic mail is transmitted. With this system, however, receivers seldom open a received electronic mail repeatedly, so that the advertisement inserted in the electronic mail is transitional and an continuous effect of the advertisement can not be expected.

Japanese Patent Laid-Open Publication No. HEI 11-3348 discloses an advertisement system for electronic chat for advertisement to users. With the advertisement system for electronic chat, different from the "batch broadcasting system" through mass media which is the current magatrend, the advertisement effect and cost performance of an electronic advertisement can be improved depending on the "targeting system", but it is required for users of the system to read and understand each transacted dialogical text, so that the network user may feel advertisement system as their communications is illegally bugged. Therefore, any type of advertisement generates negative impression to a sponsor of the advertisement, and it is difficult to practically utilize the advertisement systems as described above.

Recently, there has been known the system generally called as instant messaging (sometimes briefly described as IM hereinafter) in which a message is directly transmitted to or received from a partner on the real time base. In this system, subscribers in the Internet exchange messages like playing catch ball using a dedicated software through the Internet network. In the general electronic mail system, a prepared mail is once transmitted to a mail server, and a receiver accesses the server to take out the messages later. Therefore, the IM is different from the electronic mail system in the point that the transmitting side is not required to wait for a response from the receiving side.

On the other hand, the chat is a service performed by a plurality of participants on the real time base, and is principally different from the IM in which one person exchanges messages with another person, and all of the messages transmitted from each participant are monitored by all participants therein. Further, as all participants in chat continuously talk with other participants via a host machine, namely on the same CPU, is different from the IM in which, after information of an IP address is exchanged, two persons directly exchanges messages without depending on any server.

As described above, in the instant messaging (IM), messages are transmitted and received through the Internet based on the telegraph system, and the system having, in addition to the instant messaging function, the advertisement distribution function has not been known yet.

As described above, an advertisement means cheaply available for medium and small company owners or private company owners through Internet has not been realized yet, and advent thereof is strongly desired.

Further, from JP 11 161588 a system for real-time information acquisition, transmission, and sharing on web is known, according to which during a chat, after authentication, a user A sends information from its terminal, and then this information is transferred from the terminal to the server by a program, and the server transfers the received information to terminals of users B and C.

Further, from US 5,848,397 a method and apparatus for scheduling the presentation of messages to computer users is known, in which a system is provided for advertisement-supported e-mail service.

### DISCLOSURE OF THE INVENTION

It is an object of the present invention to provide an information distribution system having, in addition to the instant messaging function to distribute such information as advertisements, news or others, a method for the same, and a computer-readable recording medium with a program for the same recorded therein for realization of an information distribution system for such information as advertisements, news or others making use of a network which is cost-effective and easy to use.

The information distribution system according to the present invention is an information distribution system comprising a main server having a message transmission/receiving server section and an information distribution section and a network terminal having a message transmission/receiving control section and an information control section, and the information distribution system is characterized in that the message transmission/receiving server section comprises an ID storage section for storing therein subscribers' IDs, an ID determination section for determining, when a user accesses the system, whether the user is a subscriber or not, an IP address analysis section for analyzing an IP assigned to the user when the user accesses the terminal, and a log-in monitoring section for controlling a relation between an ID of a subscriber currently logging-in and an IP address as well as the channel currently being used; the information distribution section comprises an information storage section for storing therein information such as advertisements or news including at least display character data, a subscriber attribute information storage section for storing therein attribute information of registered subscribers, and an information selection section for selecting information such as advertisements or news based on the subscriber's attribute information; the message transmission/receiving control section comprises an ID retaining section for retaining therein IDs assigned to each subscriber, and an IP address conversion section for temporally storing therein an IP address allocated during the on-line mode until the off-line mode is effected; and the information control section comprises an information storage section for storing therein information such as advertisements or news transmitted from the main server, and a character information storage section for storing therein display character data including in the aforesaid information.

With the information distribution system described above, it is possible to realize a system for distribution of information such as advertisements or news which is cost-effective and also easy to use. Namely, information such as advertisements is always displayed on a display screen of a network terminal in the on-line mode, so that the advertising effect is extremely large. Further as it is presumed that advertisement information is distributed by using attribute information, use of which has been accepted by each subscriber, so that it is possible to provide information such as advertisements to appropriate users, and it never occurs that inappropriate advertisement is distributed and causes discomfort to subscribers.

With the information distribution system according to the present invention, information such as advertisements is displayed independently from a mail or a message, so that it does not prevent subscribers from reading a message smoothly. On the contrary, when viewed from the stand point of advertisement information distributors, as the advertisement information is independently displayed, so that the advertisement information is not mistook as a message and the effect of the advertisement information is not diminished, and this point is different from the characteristics of an advertisement system based on an electronic mail system.

In the information distribution system according to the present invention, even when operations other than that for transmitting or receiving messages in the instant messaging are performed at terminals, information such as advertisements can be distributed. In the advertisement system making use of chat as described above, distribution of advertisements can be carried out only during chatting. It is not conceivable to keep a terminal in the on-line mode for a long period of time for chatting, and the information distribution system according to the present invention is different from an advertisement system making use of chatting in the points as described above.

The information distribution section should preferably have a distribution history section for storing therein historical data of distributed information to each subscriber and a distribution determination section for determining whether the information is distributed or not on the basis of the historical data. With this information distribution system, in addition to the effects described above, excessive duplication of distributed information can be evaded, which eliminates wasteful distribution of unnecessary duplicated information.

The information control section should further and preferably comprise an URL storage section for storing therein URL data included in information transmitted from the main server, an HTML generation section for generating an HTML file from the stored display character data as well as from the stored URL data, an HTML storage section for storing therein the HTML files, and a browser activation section for automatically activating a browser for displaying the HTML file on a screen. With the information distribution system, in addition to the effects as described above, by preparing an HTML file relating to the display information on a terminal, it becomes possible to show the display information in a list form, and at the same time as the display information is linked to related sites, the display information can always be shown at any time, which insures the prolonged effects of advertisements.

The information control section should further and preferably comprise a display times determination section for storing therein data relating to times of display included in information transmitted from the main server and determining the display times. With this information distribution system, in addition to the effects described above, excessive duplication of distributed information can be evaded, which eliminates distribution of duplicated and unnecessary information.

In the information distribution method according to the present invention, in a network in which a main server and a plurality of terminals are connected to each other, the main server having received a connection request signal from one terminal sends current IP address information of the terminal and/or another terminal to which the terminal required to be connected to these terminals, which makes it possible to directly transact messages between the two terminal between which the IP address information has been exchanged, and then the main server selects required information from the information such as advertisements or news stored in the main server based on the attribute of each subscriber and distributes the selected information continuously or intermittently to each of the terminals while the terminals are kept on-line. With this information distribution method, it is possible to realize cost-effective and easy-to-use distribution of information such as advertisements or news by making use of the network.

The computer-readable recording medium with a program recorded therein according to the present invention stores therein a program for concurrently executing the processing for displaying an incoming message in an instant messaging on a network terminal and the processing for displaying information such as advertisements or news transmitted from a network server. With the computer-readable recording medium, it is possible to realize a cost-effective and easy-to-use distribution of information such as advertisements and news.

It is preferable to store a program for generating an HTML file from display character data included in the information transmitted from the network and URL data and also displaying the HTML file on a terminal in the computer-readable recording medium with a program recorded therein. With this computer-readable recording medium, it is possible to check the HTML files displayed in a list form for each type of information to be displayed in a browser, so that it is possible to obtain the displayed information according to the necessity.

In the computer-readable recording medium with the program stored therein, it is preferable that the HTML file stores therein a one-click double-action program comprising processing for linking to a specified URL and processing for transmitting a click signal about specified URL. With this computer-readable recording medium, it is possible to immediately obtain required detailed information by linking to the specified URL. In addition, by transmitting the click signal, the two parameters of "times of distribution of advertisements" and "a number of actual clicks" may be used as a criteria for accounting for each displayed advertisements.

The computer-readable recording medium with a program recorded therein according to the present invention stores therein a program enabling instant messaging, upon receipt of a request for connection from a network terminal, between the terminal and a terminal to which the terminal is to be connected, selecting information such as advertisements or news stored in a network server by analyzing attributes of subscribers previously registered at each terminal, and continuously or intermittently distributing the information to each terminal while the terminal is in the on-line mode. With this computer-readable recording medium, it is possible to realize cost-effective and easy-to-use distribution of information such as advertisements or news making use of a network.

The computer-readable recording medium with a program stored therein should preferably store therein a program capable of carrying out, in addition to the processing described above, the processing for receiving advertisement draft information transmitted from a network terminal of a sponsor of the advertisement as well as payment information from a network terminal in a bank and also for verifying the received information. With this computer-readable recording medium, it is possible to reduce the cost required for management of drafts of advertisements. Also as an effect inherent to that described above, it is possible to provide an advertisement means which even owners of medium or small size companies as well as of private companies.

### BRIEF DESCRIPTION OF DRAWINGS

Fig. 1 is an explanatory view showing the general concept of an information distribution method according to the present invention;
Fig. 2 is a block diagram showing an instant messaging system;
Fig. 3 is a view showing an example of a display in the stand-by mode at a terminal constituting the instant messaging system;
Fig. 4 is a view showing an example of a start-up screen of a browser showing advertisements in a list form;
Fig. 5 is a block diagram showing configuration of a terminal in the information distribution system;
Fig. 6 is a block diagram showing a main server in the information distribution system;
Fig. 7 is a flow diagram showing a sequence of operations for selecting advertisement information in the main server;
Fig. 8 is an explanatory view showing an input draft management system in the advertisement distribution system; and
Fig. 9 is a view showing an example of a monitor display of an input draft format into the input draft management server.

### BEST MODE FOR CARRYING OUT THE INVENTION

Preferred embodiments of the present invention as the advertisement distribution system as well as the advertisement distribution method making use of instant messaging (IM) are described below with reference to drawings.

### (1) General concept for IM

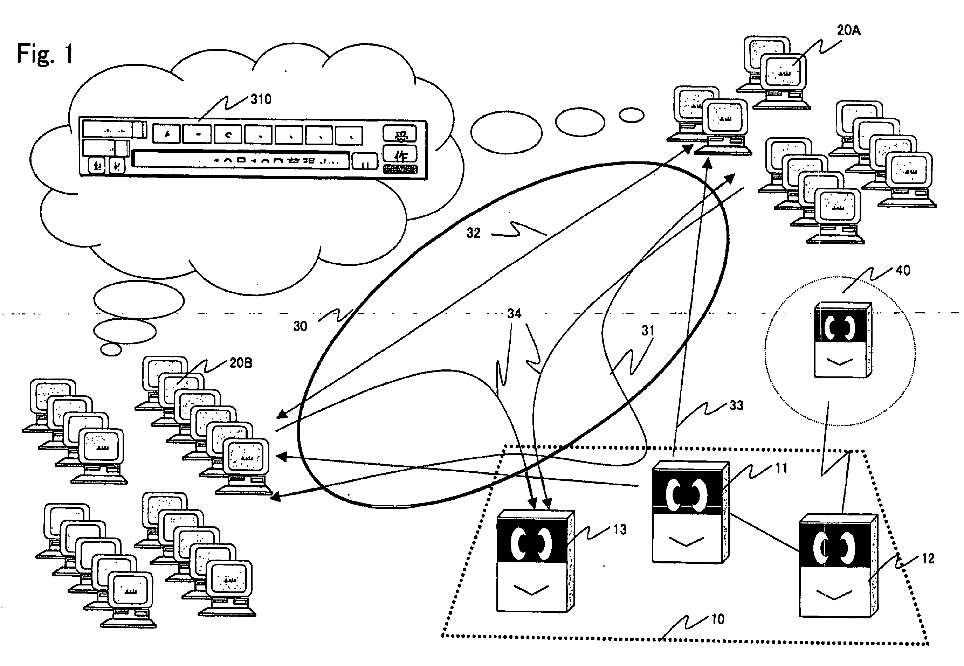

Fig. 1 is an explanatory view showing the general concept for the system according to the present invention, and in this system, an administration center 10 for this system, which is surrounded by a dotted line frame, and groups of network terminals 20A, 20B are connected to each other through the Internet 30. The administration center 10 comprises a main server 11 having administrative function for the message transaction system and function for distributing information such as news or advertisements (represented by advertisements hereinafter) to the groups of terminals 20A, 20B, an input draft management server 12, and a click analysis server 13 for receiving the "link information" transmitted from the groups of terminals 20A, 20B. The servers 11, 12, and 13 may be replaced with one network server, but the distributed system is shown in this figure for convenience of explanation of the server functions. The reference numeral 40 indicates a bank server, which is described hereinafter.

Shown in Fig. 1 are paths for an initial signal 31 generated when subscribers log in the message transaction system from their network terminals 20A or 20B, a message signal 32 transacted between the subscribers, an advertisement distribution signal 33, and a click signal 34 for a specified URL. The reference numeral 310 is a display screen for the message transaction system at the network terminals 20A and 20B in the stand-by mode.

In Fig. 1, when the initial signal 31 for a request of connection is transmitted from a subscriber operating the terminal 20A to the main server 11, the main server 11 sends IP address information currently being used by the terminal 20A to the terminal 20B, and then direct transaction of messages is started between the two terminals 20A and 20B by means of the message signal 32. The main server 11 analyzes attributes of the subscribers operating the terminals 20A and 20B respectively, selects appropriate ones from advertisements stored therein, and distributes the selected advertisements to the terminals 20A and 20B respectively.

### (2) Configuration of the IM system

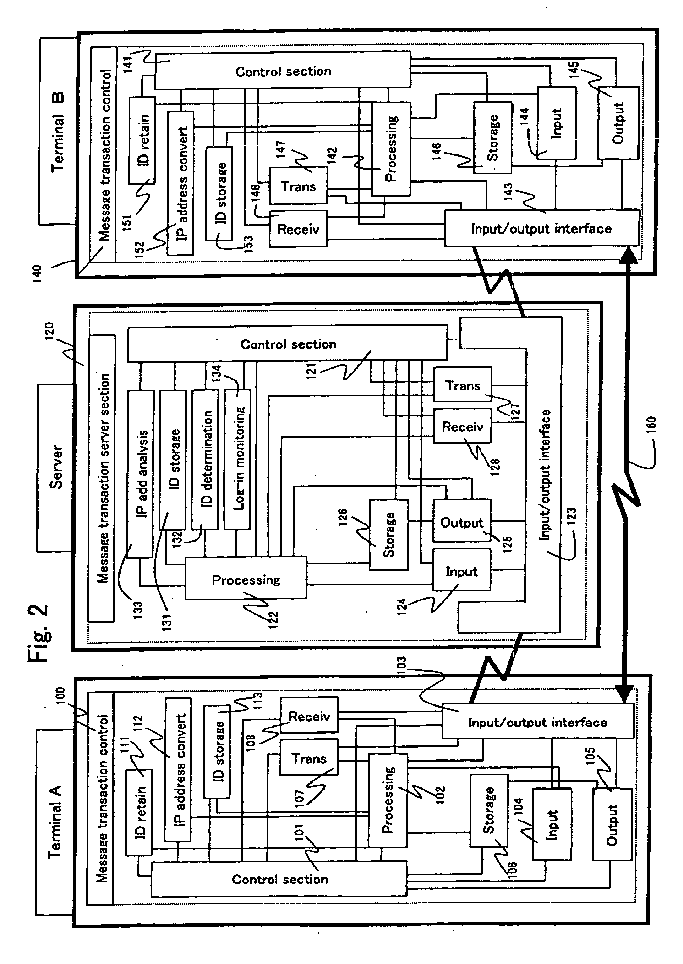

At first, the message transaction system is described with reference to the block diagram showing a system for transaction of messages shown in Fig. 2.

In Fig. 2, message transaction control sections 100, 140 are provided at subscribers' terminals A and B respectively, and a message transaction server section 120 is provided in the center server. Each of the sections has components normally required to execute the functions which are to be performed by the section. Namely, the components are control sections 101, 121, 141 each for controlling operation in each of the sections 100, 120,140; processing sections 102, 122, 142 for executing the data processing to be executed in the respective sections; input/output interfaces 103, 123, 143 connected to various types of input/output peripheral devices not shown in the figure and network; input sections 104, 124, 144 for receiving data from the input/output interfaces 103, 123, 143 respectively; output sections 105, 125, 145 each for outputting data; storage sections 106, 126, 146 for storing data therein; transmission sections 107, 127, 147 for transmitting message data; and receiving sections 108, 128, 148 for receiving message data.

Provided at message transaction control sections 100, 140 of the terminals A and B are, in addition to the ordinary component sections as described above, ID retaining sections 111, 151 for retaining therein IDs allocated to subscribers respectively from the center, and IP address conversion sections 112, 152 for temporally storing therein IP addresses allocated to the subscribers from providers in which the subscribers subscribe respectively when the on-line mode is effected until the off-line mode is effected. Further the message transaction sections 100, 140 should preferably have ID storage sections 113, 153 each for selecting candidates for ID exchanger from among network subscribers and previously storing the subscribers' IDs respectively.

The message transaction server section 120 further comprises, in addition to the ordinary component sections which should normally be provided with, an ID storage section 131 for storing therein subscribers' IDs, an ID determination section 132 for determining whether, when a user accesses the system, the user is a subscriber or not; an IP address analysis section 133 for analyzing an IP address for use allocated from the provider to each subscriber when the subscriber's terminal accesses and is connected to the network; and a log-in monitoring section 134 for controlling a relation between an ID of each subscriber currently logging-in and an IP address as well as channel for signal transaction.

### (3) Transmission function of IM

In relation to the message transaction system described above, at first the transmission function is described. To run the transmission function, data for transmission is input via the input/output interface 103, at the terminal A in the transmitting side according to an instruction from the control section 101, and the data is stored in the input section 104. The input data is transferred according to an instruction from the control section 101 to the storage section 106, and the storage section 106 stores the data according to an instruction from the control section 101. When an instruction command is input into the input section 104, the instruction command is transmitted according to an instruction from the control section 101 to the processing section 102. The processing section 102 analyzes the instruction command according to an instruction from the control section 101, and instructs the data to be processed to the storage section 106. The storage section 106 sends the processed data according to an instruction from the control section 101 to the transmission section 107, and the transmission section 107 transmits a result of processing via the input/output interface 103 according to an instruction from the control section 101 through the network

The transmitted message data is sent through the network and is received through the input/output interface 123 of the server into the receiving section 128. The received data is transferred according to an instruction from the control section 121 to the storage section 126, and the storage section 126 stores the data according to an instruction from the control section 121. From this point of time on, the received data is monitored by and put under control by the log-in monitoring section 134 according to an instruction from the control section 121. The received data stored in the storage section is subjected to ID verification by the ID storage section 131 through the processing section 122 according to an instruction from the control section 121, and determination as to whether the ID is a registered one or not is performed by the ID determination section 132. When it is determined that the received data is a registered ID, the IP address for the received data is analyzed via the processing section 122 by the IP address analysis section 133 according to an instruction from the control section 121. The analyzed IP address is stored in the log-in monitoring section 134. The processing section 122 links the analyzed IP address to the ID as well as to the message. Further the processing section analyzes an IP address of a terminal to which the data is to be transmitted (described as a receiver' s IP address hereinafter), converts an IP address and an ID of the receiver currently logging in stored in the log-in monitoring section 134 and sends the converted data to the transmission section 127, and transmission section 127 transmits a result of processing according to an instruction from the control section 121 via the input/output interface 123 to terminals connected to the network.

### (4) Receiving function of IM

To effect the receiving function in this system, at the terminal B in the receiving side shown in Fig. 2, data transmitted via the input/output interface section 143 is received by a receiving section 148 according to an instruction from the control section 141. The received data is transmitted according to an instruction from the control section 141 to the processing section 142, the processing section 142 transfers the data according to an instruction from the control section 141 to the storage section 146, and the storage section 146 stores therein the data according to an instruction from the control section 141. The processing section 142 receives an instruction from the control section 141 and sends a signal indicating arrival of the data upon an instruction from the control section 141 via the output section 145 to display units such as monitors not shown in the figure. A subscriber having received this signal starts an operation for opening the message on the monitor. A command is input into the input section 144 in response to the operation, and the command is transmitted according to an instruction from the control section 141 to the processing section 142. The processing section 142 analyzes the command according to an instruction from the control section 141, and instructs the data to be processed to the storage section 146. The storage section 146 transmits the data to be processed according to an instruction from the control section 141 to the output section 145, and the output section 145 displays the data on the receiver's terminal according to an instruction from the control section 141 via the input/output interface 143.

As described above, the terminals A and B having exchanged a first message therebetween recognize the partner's IP address currently being used, so that the second message and on can be exchanged through the network 160 by connecting the input/output interfaces 103, 143 of the terminals A and B to each other directly, and not through any server.

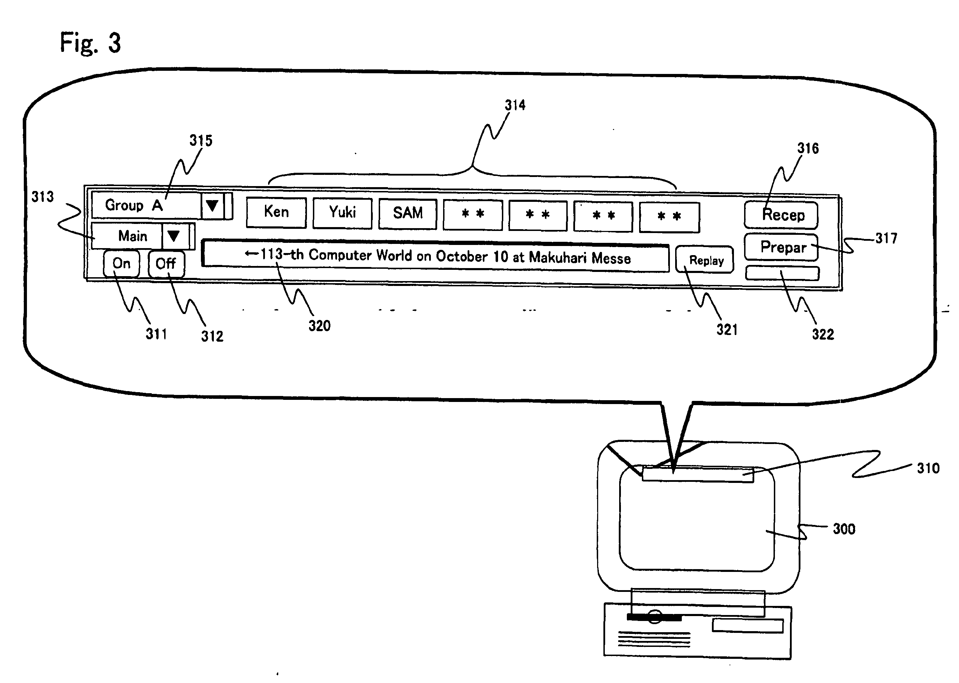

Fig. 3 shows an example of a display on a monitor 300 when the terminals A and B each constituting the instant messaging system is in the stand-by mode, and a band-formed window 310 is shown in an upper section of the monitor 300.

Operation buttons required for each terminal user to perform operations for transmitting and receiving messages and a display section are shown within the window 310. Provided in the left-hand side of the window 310 are a connection button 311 and a disconnection button 312 used for transmitting a on-line connection command or a disconnection command respectively, and a pull-down menu 313 enabling selection of a main menu for controlling the entire window 310. Further provided in the upper section of the window 310 are an incoming message display board 314 indicating messages sent from subscribers previously registered, and a pull-down menu 315 in which the registered subscribers are divided to a plurality of groups and selected according to the necessity. Provided in the right-hand section of the window 310 are a reception button 316 for opening the message window upon reception of a message and a preparation button 317 for opening an window for preparing a message to be transmitted. The operation buttons and the display section are operated and displayed for transmitting and receiving the corresponding messages. Namely, when a message is transmitted to the terminal A from the outside, the IM facility in the terminal A recognizes the subscriber having transmitted the message, determines to which group the subscriber belongs at the terminal A, displays the group name 315, and displays the subscriber having transmitted the message on the incoming message display board 314 by lighting up the corresponding section. Then the subscriber operating the terminal A clicks the lit section on the display board and further clicks the reception button 316 to open the message window and read the message.

### (5) General concept for the advertisement distribution system

The instant messaging system was described above, and a display column for displaying advertisement information and operation buttons are provided in a lower section of the window 310. These are an information display column 320 for displaying advertisement information thereon, a replay button 321 for replaying the displayed advertisement information irrespective of a sequence specified by the system, and an browse button 322 for browsing a list of advertisement information. In the information display column 320, it is preferable to flow character information as a horizontally lengthy strip from the right to the left for saving the space therein. Further it is preferable that the list of display information described above can be browsed as HTML information by browser program. Further also a distribution history menu for the advertisement information may be added in the window 310, and with this feature also the advertisement information displayed in the past can be referred, which further improves continuity of the advertisement effect.

Operations for displaying an advertisement in the window 310 are described below.

The advertisement is continuously or intermittently displayed, irrespective of whether a message is being transacted, a message is being prepared, or the current operation is the stand-by mode, in the information display column 320 of the monitor 300 so long as the monitor is kept in the on-line mode. A subscriber at the terminal, who has noticed the displayed advertisements, can browse a list of the displayed advertisements at any time irrespective of whether the operation for transmitting or receiving a message is over or now being performed by clicking on the browse button 322.

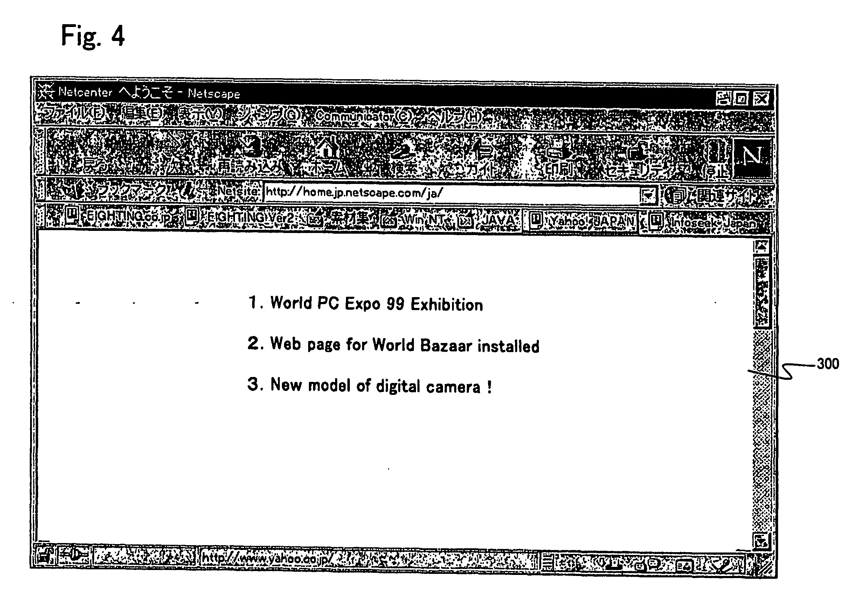

Fig. 4 is a view showing an example of a initial screen of a browser program, on which advertisements are shown in a list form. When a user clicks on a desired item on the list, the user is linked to a prescribed URL. Further in association with linkage to the specified URL, also click information is transmitted, and this feature is described hereinafter.

### (6) Advertisement distribution system (in the terminal side)

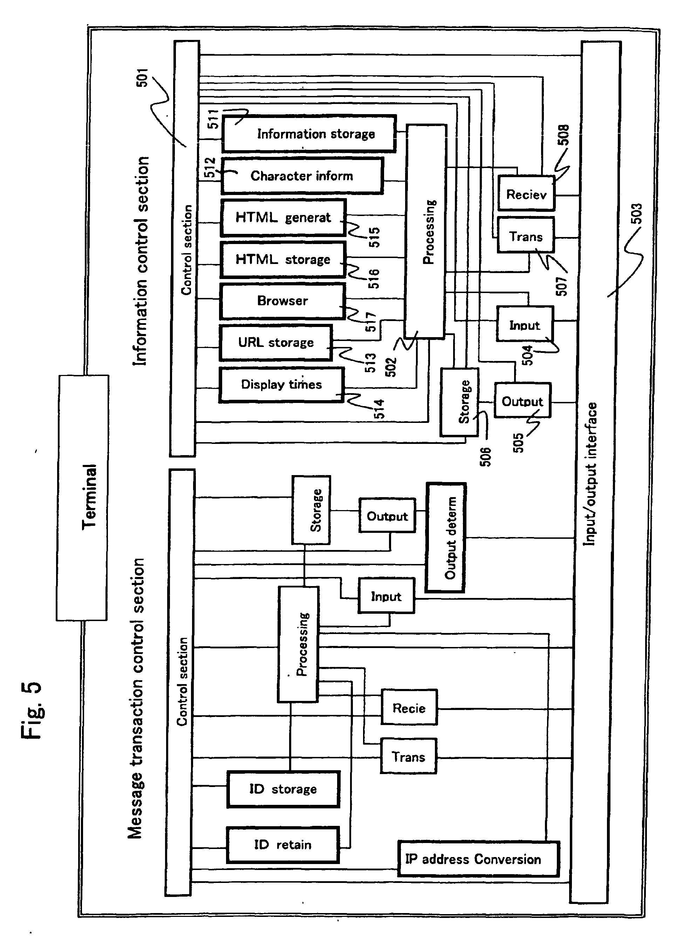

Fig. 5 is a block diagram showing configuration of a terminal as a network client, and a message transaction control section and an information control section are provided at the terminal. The message transaction control sections 100, 140 were already described above, and only the information control section is described herein.

The information control section has also ordinary component sections required for executing the functions thereof, which are a control section 501 for controlling operations of the information control section, a processing section 502 for processing data, an input/output interface 503 connected to various types of input/output peripheral devices not shown in the figure as well as to the network, an input section 604 for receiving data from the input/output interface 503, an output section 505 for outputting data, a storage section 506 for storing therein data, a transmission section 507 for transmitting information data such as advertisement information, and a reception section 508 for receiving the information data.

The information control section comprises, in addition to the component sections for executing the ordinary functions assigned thereto, an information storage section 511 for storing therein advertisement information transmitted from the main server 11, a character information storage section 512 for storing display character data included in the information, an URL storage section 513 for storing therein URL data for the information, a display times determination section 514 for storing therein data for display times of information and determining the display times of information, an HTML generation section 515 for generating an HTML file from the display character data as well as from the URL data, an HTML storage section 516 for storing therein the HTML file, and a browser start-up section 517 for automatically starting up the browser for displaying the HTML file on the screen.

Actions of the information control section at the terminal are described below.

The advertisement information transmitted from the main server 11 is received via the input/output interface 503 by the reception section 503, and the information data is transferred by the processing section 502 to the storage section 506 according to an instruction from the control section 501. The transferred data is analyzed by the processing section 502 according to an instruction from the control section 501, and character information data, URL data and display times data in the advertisement information are extracted to be stored in the character information storage section 512, URL storage section 513, and display times determination section 514 respectively, while the original advertisement information is stored by the processing section 502 into the information storage section 511 according to an instruction from the control section 501.

The data stored in the storage section 506 is compiled into an HTML file based on the data stored in the character information storage section 512 as well as in the URL storage section 513 in the HTML generation section 515 according to an instruction from the control section 501, and is stored in the HTML storage section 516 by the processing section 502 according to an instruction from the control section 501. Compiling data into the HTML file should preferably be performed by replacing the characters stored in the character information storage section 512 and also the corresponding URL stored in the URL storage section 513 with a portion of a file format previously prepared in the HTML generation section 515.

By compiling the data into the HTML file as described above, it becomes possible to display advertisement information in the list form as shown in Fig. 4. Further it is possible to general an HTML file including the "one-click, double-action" program therein. The "one-click, double-action" means that two actions are simultaneously performed in response to generation of an event of "clicking on a particular line or a button", and this program can be prepared with the programming language such as Java or JavaScript. In this embodiment, one action is "linkage to a specified URL", and the other action is to transmit click signal 34 for the specified URL reporting "The terminal with ID XXXX has been linked to URL XXXX in response to this click operation." to the specified server (the clock analysis server 13 in Fig. 1) via the network.

With the latter action, the click analysis server 13 can recognizes that the advertisement distributed from the main server 11 was clicked at a subscriber' s terminal and the subscriber browsed the linked information. As a result, in this advertisement information distribution system according to the present invention, two types of data, namely "the number of advertisements" distributed from the main server 11 to a subscriber' s terminal and "the actual click times" indicating the times when the subscriber clicks on and accesses each advertisement information, can be used as the accounting data for advertisement fee.

The character data stored in the character information storage section 512 is transferred to the output section 505 by the processing section 502 according to an instruction from the control section 501, and display times of the transferred character data is specified by the display times determination section 514 according to an instruction from the control section 501, and the data is displayed as a telop via the input/output interface 503 in the information display column 320 of the monitor 300 as illustrated in Fig. 3.

As for the advertisement character data displayed herein, when the browse button 322 shown in Fig. 3 is clicked, an instruction command is sent via the input/output interface 503 to the input section 504, a browser to be used is activated via the processing section 502 by the browser start-up section 517 according to an instruction from the control section 501 having received the instruction command, the HTML file for the displayed character data is transferred by the processing section 502 having an instruction from the control section 501 from the HTML storage section 516 to the storage section 506, and is displayed within the browser as shown in Fig. 4 via the output section 505 and input/output interface 503. The advertisement character data displayed in the browser jumps to a prescribed URL in response to a click action as described above, and at the same time the click information is transmitted as access analysis data to the click analysis server 13.

### (7) Advertisement distribution system (in the server side)

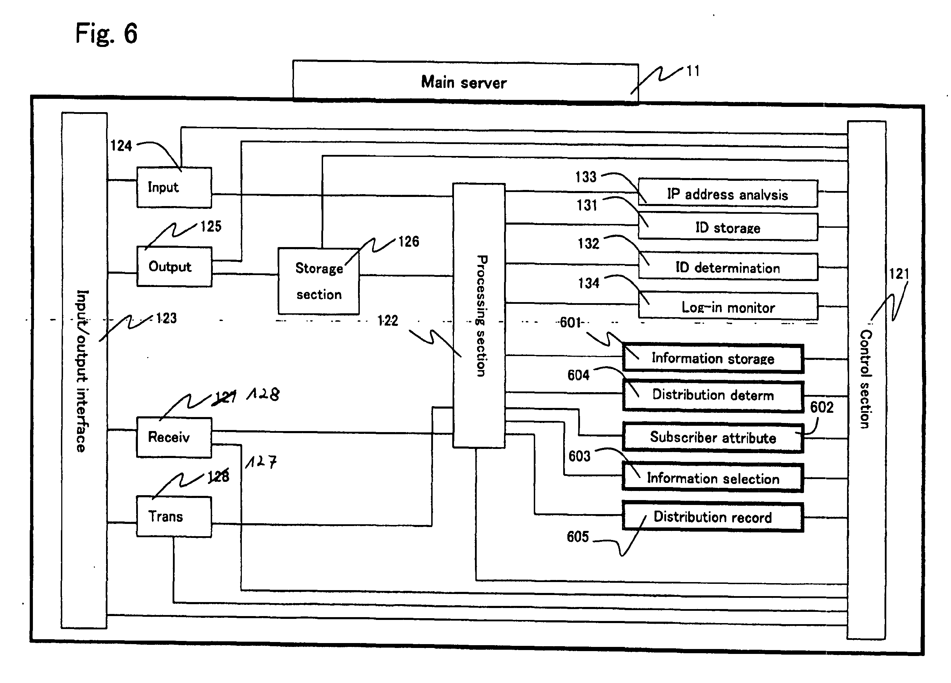

The method of advertisement distribution from the main server 11 to a network terminal is described with reference to the block diagram of the main server 11 shown in Fig. 6.

In Fig. 6, the control section 121, processing section 122, input/output interface 123, input section 124, output section 125, storage section 126, transmission section 127, receiving section 128, ID storage section 131, ID determination section 132, IP address analysis section 133, and log-in monitoring section 134 were described as components of the message transaction server 120 in the main server 11 shown in Fig. 2 respectively, and the same reference numerals are assigned to the components, and detailed description thereof is omitted herefrom. The main server 11 comprises, for realizing the function for distributing information such as advertisements, and in addition to the components described above, an information storage section 601 for storing advertisement information, a subscriber attribute information storage section 602 for storing therein attributes (such as name, address, sex, age, vocation, hobby or the like) of subscribers previously registered in the message transaction system, an information selection section 603 for analyzing the attribute information of subscribers and conditions for advertisement distribution and selecting advertisement information to be transmitted to the subscribers, a distribution determination section 604 for analyzing the selected information on historical data and conditions of distribution stored in a distribution record section 605 described below to determine whether the information is to be distributed to the subscriber or not, and a distribution record section 605 for storing historical data on distribution of advertisement to each subscriber. The main component sections of the information distribution section provided in the main server 11 are indicated by the reference numerals 601 to 605 within a heavy line frame in Fig. 6.

In the main server 11, at first, the processing section 122 having received an instruction from the control section 121 inquires the subscriber attribute information storage section 602 of the subscriber attribute information of each of the subscribers of a terminal A from which a subscriber logs in for message transaction through the message transaction system as well as of a terminal B communicating with the terminal A, and acquires the information. Then the processing section 122 having received an instruction from the control section 121 makes the information selection section 603 select advertisements to be distributed to the subscribers based on the conditions concerning attributes of subscribers to which the advertisement is to be distributed, said condition data stored in the information storage section 601 as well as on attributes of subscribers satisfying the specified conditions. The distribution determination section 604 having received an instruction from the control section 121 checks record of distribution of the selected advertisement to each subscriber stored in the distribution record section 605, determines how many times the information has been distributed to the subscribers, and gives an instruction to the processing section 122. The instructed processing section 122 transfers the result of determination above to the transmission section 128, and distributes the advertisement via the input/output interface 123 and through the network to the instruction subscriber(s).

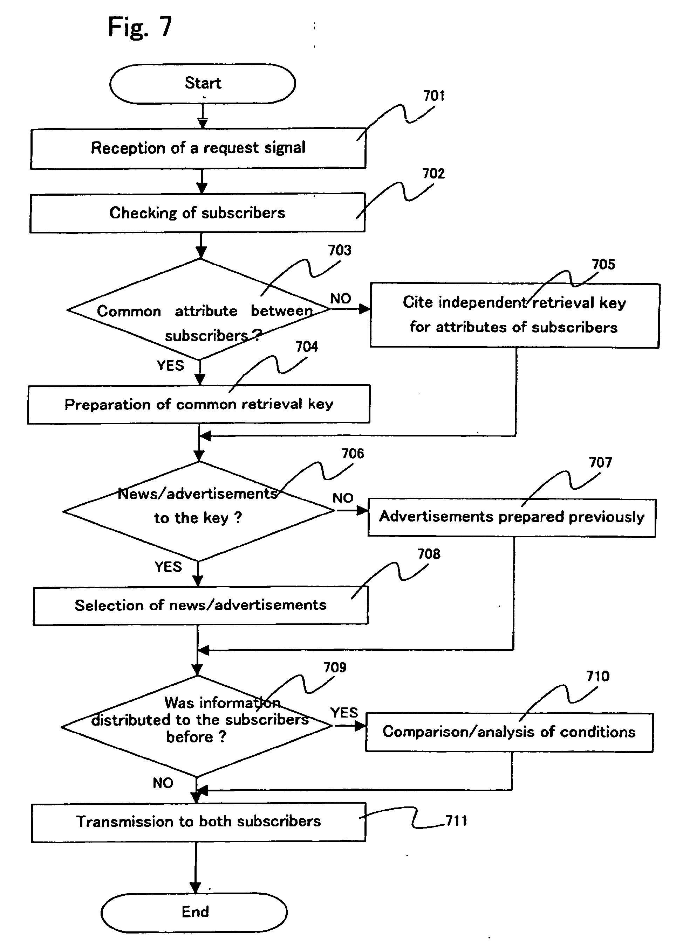

The operation sequence for selection of advertisement in the main server 11 is described in detail below with reference to the flow chart shown in Fig. 7.

When a user of the message transaction system transmits a message transaction request signal using the message transaction system to the main server 11 and the main server 11 receives the signal (701), the main server 11 analyzes the subscribers in the message transaction system based on the signal and checks each of the subscribers' attributes (702). The main server 11 analyzes and compares attributes of the two subscribers to each other (703), and when it is determined that there the attributes of two (or more) subscribers include any identical portion, a common retrieval key for selection of an advertisement to be distributed to the subscribers is newly prepared (704). When there is not common attribute among the subscribers, different advertisements are selected (708) for the subscribers by referring to discrete attributes of the subscribers respectively (705). Whether the advertisement information corresponding to the key is present or not is checked (706) prior to this selection step, and when there is no corresponding advertisement, another information such as advertisements or news previously prepared is used as the alternatives (707).

Then the advertisement selected in the selection step above is checked for the record of distribution to each of the subscribers to which the advertisement information is to be distributed (709) to prevent the same advertisement from being distributed to the same subscribers in excessive repetition. When the additional condition allowing repetitive distribution of the same advertisement information is attached to the advertisement information to be distributed, the additional condition is checked (710), and the advertisement information is distributed repetitively within a range indicated by the additional condition. The advertisement information picked up through the procedure described above is distributed to the predetermined subscribers (711).

### (8) Input draft management system in the advertisement distribution system

Then configuration and actions of the input draft management server 12 in the advertisement distribution system are described below.

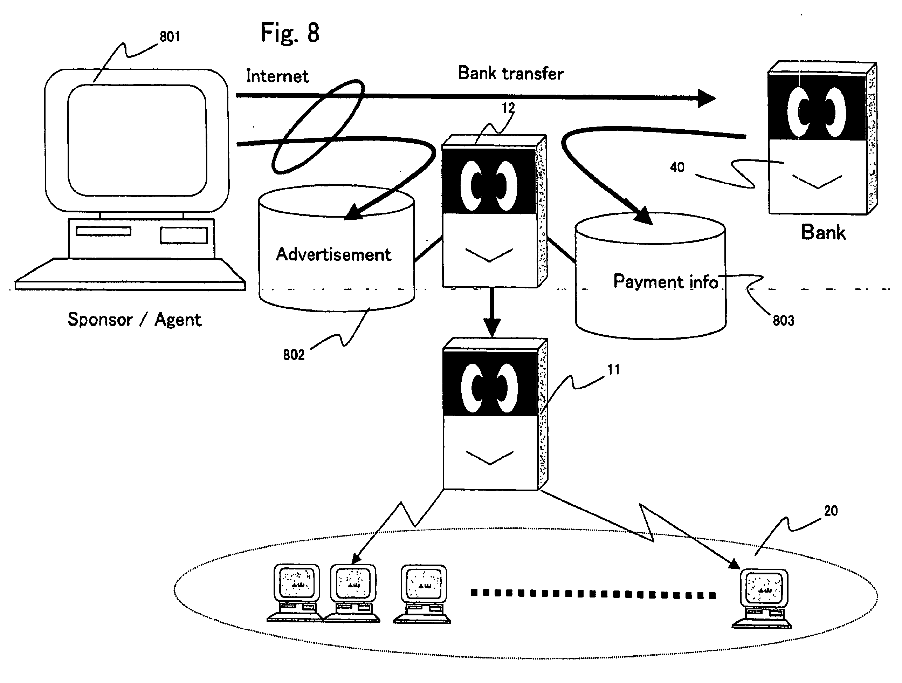

Fig. 8 is an explanatory view in which the advertisement distribution system using the IM shown in Fig.1 is replaced mainly with the input draft management server 12, the input draft management server 12 having an advertisement draft storage section 802 and a payment information storage section 803 is provided at the center with the bank server 40 provided in the right side therefrom and also a network terminal 801 for a sponsor or an advertisement agent provided in the left side therefrom.

The input draft management server 12 has the three functions described below.
(i) Function for accepting information such as an advertisement draft from the network
(ii) Function for accepting payment information transmitted from the bank server 40
(iii) Function for confirming that the payment corresponding to the accepted information such as an advertisement draft has been received and also for transferring the information such as the advertisement draft for which the payment has been received to the main server 11.

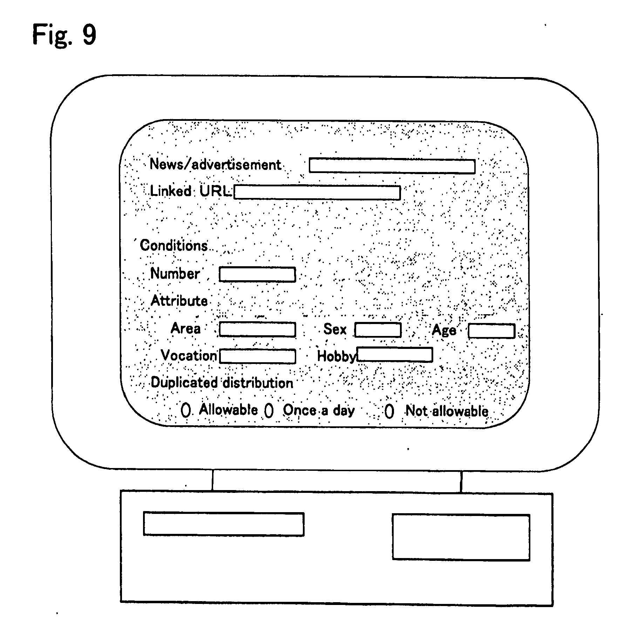

A sponsor such as an owner of a small company can be input his draft from the sponsor's terminal 801 at any time. A monitor display of an input draft format is shown in Fig. 9, and a news or advertisement message, a linked URL, and various conditions for distribution are input in this format. The input advertisement data is stored in the advertisement draft storage section 802 in the input draft management server 12 via the network. The sponsor deposits an advertisement fee in an bank account of an administrator of this system according to the necessity, and such information as an amount, payer's name, and a telephone number of the payer is transmitted as payment information from the server 40 in the specified bank to the input draft management server 12, and is stored in the payment information storage section 803. The input management server 12 analyzes and compares the data stored in the advertisement draft storage section 802 and in the payment information storage section 803 to each other upon reception of the payment information. When the data stored in the two sections are identical, the management server 12 transmits the advertisement data to the main server 11, and the main server 11 distributes the advertisement to the group of terminals 20 in the message transaction system as described above.

Processing performed in the message transaction server section 120 and information distribution section in the main server 11 as well as in the message transaction control sections 100, 140 and the information control sections at the terminals A and B is realized with a computer program, and the computer program can be recorded as a processing program in a computer-readable recording medium such as a CD-ROM or a DVD-ROM.

## Claims

1. An information distribution system for an instant messaging system comprising a main server (11) having a message transaction server section (120) and an information distribution section and a network terminal (100, 140) having a message transaction control section and an information control section, wherein
said message transaction server section (120) comprises:
an ID storage section (131) for storing therein subscribers' IDs;
an ID determination section (132) for determining, when a user accesses the system, whether the user is a subscriber or not;
an IP address analysis section (133) for analyzing an IP assigned to the accessing terminal for current connection; and
a log-in monitoring section (134) for controlling a relation between an ID of the subscriber currently logging-in and an IP address of the subscriber and a channel;
said information distribution section comprises:
an information storage section (601) for storing therein information such as advertisements or news including at least display character data;
a subscriber attribute information storage section (602) for storing therein attribute information of registered subscribers; and
an information selection section (603) for selecting information such as advertisements or news based on the subscriber's attribute information;
said message transaction control section (100, 140) comprises:
an ID retaining section (111, 151) for retaining therein IDs assigned to subscribers respectively; and
an IP address conversion section (112, 152) for temporally storing therein an IP address assigned to the subscribers during the on-line mode until the off-line mode is effected;
and said information control section comprises:
an information storage section (511) for storing information such as advertisements or news transmitted from the main server; and
a character information storage section (512) for storing display character data included in the said information.

2. The information distribution system according to claim 1, wherein said information distribution section further comprises:
a distribution history section for storing therein history data of distributed information to each subscriber; and
a distribution determination section for determining whether the information is distributed or not on the basis of the history data.

3. The information distribution system according claim 1 or 2, wherein said information control section further comprises:
a URL storage section (513) for storing therein URL data included in information transmitted from the main server;
an HTML generation section (515) for generating an HTML file from the stored display character data and the stored URL data;
an HTML storage section (516) for storing the HTML files therein; and
a browser activation section (517) for automatically activating a browser for displaying the HTML file on a screen.

4. The information distribution system according to any of claims 1 to 3, wherein said information control section further comprises a display times determination section (514) for storing therein data concerning times of display included in information transmitted from the main server and determining how many times the information has been displayed.

5. A main server for an instant messaging system having a message transaction server section (120) and an information distribution section, wherein
said message transaction server section (120) comprises:
an ID storage section (131) for storing therein subscribers' IDs;
an ID determination section (132) for determining, when a user accesses the system, whether the user is a subscriber or not;
an IP address analysis section (133) for analyzing an IP assigned to an accessing terminal for current connection; and
a log-in monitoring section (134) for controlling a relation between an ID of the subscriber currently logging-in and an IP address of the subscriber and a channel;
said information distribution section comprises:
an information storage section (601) for storing therein information such as advertisements or news including at least display character data;
a subscriber attribute information storage section (602) for storing therein attribute information of registered subscribers;
an information selection section (603) for selecting information such as advertisements or news based on the subscriber's attribute information; and
a transmission section (127) for transmitting the information to the terminal.

6. The main server according to claim 5, wherein said information distribution section further comprises:
a distribution history section for storing therein history data of distributed information to each subscriber; and
a distribution determination section for determining whether the information is distributed or not on the basis of the history data.

7. A network terminal for an instant messaging system having a message transaction control section and an information control section, said message transaction control section (100, 140) comprises:
an ID retaining section (111, 151) for retaining therein IDs assigned to subscribers respectively; and
an IP address conversion section (112, 152) for temporally storing therein an IP address assigned to the subscribers during the on-line mode until the off-line mode is effected so that messages can directly be transacted between terminals;
and said information control section comprises:
an information storage section (511) for storing information such as advertisements or news transmitted from a main server; and
a character information storage section (512) for storing display character data included in the said information.

8. The network terminal according claim 7, wherein said information control section further comprises:
a URL storage section (513) for storing therein URL data included in information transmitted from the main server;
an HTML generation section (515) for generating an HTML file from the stored display character data and the stored URL data;
an HTML storage section (516) for storing the HTML files therein; and
a browser activation section (517) for automatically activating a browser for displaying the HTML file on a screen.

9. The network terminal according to any of claims 7 or 8, wherein said information control section further comprises a display times determination section (514) for storing therein data concerning times of display included in information transmitted from the main server and determining how many times the information has been displayed.

10. An information distribution method for an instant messaging system wherein a main server having received a connection request signal from a terminal (100) through a network comprising the main server (120) and a plurality of terminals (100, 140) communicating through a network to each other sends current IP address information of the terminal and/or another terminal communicating with the terminal to these terminals so that messages can directly be transacted between the two terminals having exchanged the IP address information between each other; the main server selects information such as advertisements or news stored in the main server based on attributes of the subscribers operating the terminals; and the information is distributed continuously or intermittently to the terminals while the terminal is kept connected in the on-line mode.

11. A computer-readable storage medium storing a set of instructions which, when executed by a computer causes the computer to perform instant messaging upon a connection request from a network terminal (100) between the terminal (100) and a further terminal (140) communicating through a network to each other so that messages can directly be transacted between the two terminal (100, 140) having exchanged IP address information between each other, selecting information such as advertisements or news stored in a network server by analyzing attributes of previously registered subscribers currently operating the terminals, and distributing the information continuously or intermittently to the terminals while the terminals are kept connected in the on-line mode.

12. The computer-readable storage medium according to claim 11 with a program recorded therein for carrying out, in addition to the operations above, reception of advertisement draft information transmitted from a sponsor's network terminal and payment information transmitted from a network terminal in a bank and collation of the two types of received information to each other.

13. The computer-readable storage medium according to claim 11, storing a set of instructions which, when executed by the computer causes the computer to perform simultaneously executing a processing for displaying arrival of a message in an instant messaging on the network terminal and a processing for displaying information such as advertisements or news transmitted from the network server on said network terminal.

14. The computer-readable storage medium according to claim 13 with a program recorded therein for generating an HTML file from display character data included in the information transmitted from the network server and URL data, and for displaying the HTML file on a terminal.

15. The computer-readable storage medium according to claim 14, wherein said HTML file includes a one-click double-action program comprising processing for linking to a particular URL and processing for transmitting a click signal about particular URL.

## Patentansprüche

1. Ein Informationsverteilungssystem für ein Sofortdatentransfersystem, umfassend einem Hauptserver (11), der einen Nachrichtentransaktions-Serverabschnitt (120) und einen Informationsverteilungsabschnitt und ein Netzwerk-Endgerät (100, 140), das einen Nachrichtentransaktions-Steuerabschnitt und einen Informations-Steuerabschnitt aufweist, aufweist, wobei
der Nachrichtentransaktions-Serverabschnitt (120) umfasst:
einen ID-Speicherabschnitt (131) zum Speichern von IDs von Teilnehmern-darin;
einen ID-Bestimmungsabschnitt (132) zum Bestimmen, ob der Anwender ein Teilnehmer ist, wenn ein Anwender auf das System zugreift;
einen IP-Adressenanalysierungsabschnitt (133) zum Analysieren einer IP, die dem zugreifenden Endgerät für die aktuelle Verbindung zugeordnet ist; und
einen Log-in-Überwachungsabschnitt (134) zum Steuern einer Beziehung zwischen einer ID des Teilnehmers, der sich momentan einloggt, und einer IP-Adresse des Teilnehmers und einem Kanal;
wobei der Informationsverteilungsabschnitt umfasst:
einen Informationsspeicherabschnitt (601) zum Speichern von Informationen, so wie Werbungen oder Neuigkeiten, darin, die mindestens Anzeigezeichendaten beinhalten;
einen Teilnehmer-Attributinformations-Speicherabschnitt (602) zum Speichern von Attributinformationen von registrierten Teilnehmern darin; und
einen Informationsauswahlabschnitt (603) zum Auswählen von Informationen, so wie Werbungen oder Neuigkeiten, basierend auf den Attributinformationen des Teilnehmers;
wobei der Nachrichtentransaktions-Steuerabschnitt (100, 140) umfasst:
einen ID-Aufbewahrungsabschnitt (111, 151) zum Aufbewahren von IDs darin, die den jeweiligen Teilnehmern zugeordnet sind; und
einen IP-Adressenkonversionsabschnitt (112, 152) zum temporären Speichern von IP-Adressen darin, die den Teilnehmern während des online-Modus zugeordnet werden, bis der offline-Modus ausgeführt wird;
und wobei der Informationssteuerungsabschnitt umfasst:
einen Informationsspeicherabschnitt (511) zum Speichern von Informationen, so wie Werbungen oder Neuigkeiten, die vom Hauptserver übertragen werden; und
einen Zeichen-Informationsspeicherabschnitt (512) zum Speichern von Anzeigezeichendaten, die in den Informationen enthalten sind.

2. Das Informationsverteilungssystem nach Anspruch 1, wobei der Informationsverteilungsabschnitt ferner umfasst:
einen Verteilungshistorienabschnitt zum Speichern von Historiendaten darin von verteilten Informationen zu jedem Teilnehmer; und
einen Verteilungsbestimmungsabschnitt zum Bestimmen, ob die Information verteilt ist auf der Basis der Historiendaten.

3. Das Informationsverteilungssystem nach Anspruch 1 oder 2, wobei der Informationssteuerungsabschnitt ferner umfasst:
einen URL-Speicherabschnitt (513) zum Speichern von URL-Daten darin, die in Informationen enthalten sind, die von dem Hauptserver übertragen werden;
einen HTML-Erzeugungsabschnitt (515) zum Erzeugen einer HTML-Datei von den gespeicherten Anzeigezeichendaten und den gespeicherten URL-Daten;
einen HTML-Speicherabschnitt (516) zum Speichern der HTML-Dateien darin; und
einen Browser-Aktivierungsabschnitt (517) zum automatischen Aktivieren eines Browsers zum Darstellen der HTML-Datei auf einer Anzeige.

4. Das Informationsverteilungssystem nach einem der Ansprüche 1 bis 3, wobei der Informationssteuerungsabschnitt einen Darstellungshäufigkeits-Bestimmungsabschnitt (514) zum Speichern von Daten darin umfasst, die Darstellungshäufigkeiten betreffen, die in Informationen enthalten sind, die vom Hauptserver übertragen werden und bestimmen, wie oft die Information dargestellt wurde.

5. Einen Hauptserver für ein Sofortdatentransfersystem, das einen Nachrichtenübertragungsserverabschnitt (120) und einen Informationsverteilungsabschnitt aufweist, wobei
der Nachrichtenübertragungsserverabschnitt (120) umfasst:
einen ID-Speicherabschnitt (131) zum Speichern von IDs von Teilnehmern darin;
einen ID-Bestimmungsabschnitt (132) zum Bestimmen, ob der Anwender ein Teilnehmer ist, wenn ein Anwender auf das System zugreift;
einen IP-Adressenanalysierungsabschnitt (133) zum Analysieren einer IP, die dem zugreifenden Endgerät für die aktuelle Verbindung zugeordnet ist; und
einen Log-in-Überwachungsabschnitt (134) zum Steuern einer Beziehung zwischen einer ID des Teilnehmers, der sich momentan einloggt, und einer IP-Adresse des Teilnehmers und einem Kanal;
wobei der Informationsverteilungsabschnitt umfasst:
einen Informationsspeicherabschnitt (601) zum Speichern von Informationen, so wie Werbungen oder Neuigkeiten, darin, die mindestens Anzeigezeichendaten beinhalten;
einen Teilnehmer-Attributinformations-Speicherabschnitt (602) zum Speichern von Attributinformationen von registrierten Teilnehmern darin;
einen Informationsauswahlabschnitt (603) zum Auswählen von Informationen, so wie Werbungen oder Neuigkeiten, basierend auf den Attributinformationen des Teilnehmers; und
einen Überstragungsabschnitt (127) zum Übertragen der Information zu dem Endgerät.

6. Der Hauptserver nach Anspruch 5, wobei der Informationsverteilungsabschnitt ferner umfasst:
einen Verteilungshistorienabschnitt zum Speichern von Historiendaten darin von verteilten Informationen zu jedem Teilnehmer; und
einen Verteilungsbestimmungsabschnitt zum Bestimmen, ob die Information verteilt ist auf der Basis der Historiendaten.

7. Ein Netzwerk-Endgerät für ein Sofortdatentransfersystem, das ein Nachrichtenübertragungssteuerungsabschnitt und einen Informationssteuerungsabschnitt aufweist, wobei der Nachrichtenübertragungssteuerungsabschnitt (100, 140) umfasst:
einen ID-Aufbewahrungsabschnitt (111, 151) zum Aufbewahren von IDs darin, die den jeweiligen Teilnehmern zugeordnet sind; und
einen IP-Adressenkonversionsabschnitt (112, 152) zum temporären Speichern von IP-Adressen darin, die den Teilnehmern während des online-Modus zugeordnet werden, bis der offline-Modus ausgeführt wird, so dass Nachrichten direkt zwischen Endgeräten abgewickelt werden können;
und wobei der Informationssteuerungsabschnitt umfasst:
einen Informationsspeicherabschnitt (511) zum Speichern von Informationen darin, so wie Werbungen oder Neuigkeiten, die vom Hauptserver übertragen werden; und
einen Zeichen-Informationsspeicherabschnitt (512) zum Speichern von Anzeigezeichendaten, die in den Informationen enthalten sind.

8. Das Netzwerk-Endgerät nach Anspruch 7, wobei der Informationssteuerungsabschnitt ferner umfasst:
einen URL-Speicherabschnitt (513) zum Speichern von URL-Daten darin, die in Informationen enthalten sind, die von dem Hauptserver übertragen werden;
einen HTML-Erzeugungsabschnitt (515) zum Erzeugen einer HTML-Datei von den gespeicherten Anzeigezeichendaten und den gespeicherten URL-Daten;
einen HTML-Speicherabschnitt (516) zum Speichern der HTML-Dateien darin; und
einen Browser-Aktivierungsabschnitt (517) zum automatischen Aktivieren eines Browsers zum Darstellen der HTML-Datei auf einer Anzeige.

9. Das Netzwerk-Endgerät nach einem der Ansprüche 7 oder 8, wobei der Informationssteuerungsabschnitt (514) ferner einen Darstellungshäufigkeits-Bestimmungsabschnitt (514) zum Speichern von Daten darin umfasst, die Darstellungshäufigkeiten betreffen, die in Informationen enthalten sind, die vom Hauptserver übertragen werden und bestimmen, wie oft die Information dargestellt wurde.

10. Ein Informationsverteilungsverfahren für ein Sofortdatentransfersystem, wobei ein Hauptserver, der ein Verbindungsanforderungssignal von einem Endgerät (100) über ein Netzwerk, das den Hauptserver (120) und eine Vielzahl von Endgeräten (100, 140) umfasst, die über ein Netzwerk miteinander kommunizieren, empfangen hat, aktuelle IP-Adresseninformationen des Endgeräts und/oder anderen Endgeräten, die mit dem Endgerät kommunizieren, zu diesen Endgeräten sendet, so dass Nachrichten direkt abgewickelt werden können zwischen den zwei Endgeräten, die die IP-Adresseninformation zwischen einander ausgetauscht haben; der Hauptserver wählt Informationen, so wie Werbungen oder Neuigkeiten, die im Hauptserver gespeichert sind, basierend auf Attributen des das Endgerät betreibenden Teilnehmers aus; und die Information wird kontinuierlich oder intermittierend zu den Endgeräten verteilt, während das Endgerät im online-Modus verbunden gehalten wird.

11. Ein computerlesbares Speichermedium, das einen Satz von Instruktionen speichert, die wenn diese von einem Computer ausgeführt werden bewirken, dass der Computer Sofortdatentransfer durchführt bei einer Verbindungsanforderung von einem Netzwerk-Endgerät (100) zwischen dem Endgerät (100) und einem weiteren Endgerät (140), die über ein Netzwerk miteinander kommunizieren, so dass Nachrichten direkt abgewickelt werden können zwischen den zwei Endgeräten (100, 140), die IP-Adresseninformationen miteinander ausgetauscht haben, Auswählen von Informationen, so wie Werbungen oder Neuigkeiten, die in einem Netzwerkserver gespeichert sind, durch Analysieren von Attributen der zuvor registrierten Teilnehmer, die momentan die Endgeräte betreiben, und Verteilen der Informationen kontinuierlich oder intermittierend zu den Endgeräten, während die Endgeräte im online-Modus verbunden gehalten werden.

12. Das computerlesbare Speichermedium nach Anspruch 11 mit einem darauf aufgezeichneten Programm zum zusätzlichen Ausführen zu den oberen Operationen Empfangen von Werbungsentwurfsinformationen, die von einem Netzwerk-Endgerät eines Sponsoren übertragen werden, und Zahlungsinformationen, die von einem Netzwerk-Endgerät in einer Bank übertragen werden, und Vergleich der zwei Arten von empfangenen Informationen miteinander.

13. Das computerlesbare Speichermedium nach Anspruch 11, Speichern einen Satzes von Instruktionen, die wenn diese von dem Computer ausgeführt werden bewirken, dass de Computer simultan eine Bearbeitung zum Darstellen einer Ankunft einer Nachricht in einem Sofortdatentransfer auf dem Netzwerk und einer Bearbeitung zum Darstellen von Informationen, so wie Webungen oder Neuigkeiten, die von dem Netzwerkserver auf das Netzwerk-Endgerät übertragen werden, ausführt.

14. Das computerlesbare Speichermedium nach Anspruch 13 mit einem darin aufgezeichneten Programm zum Erzeugen einer HTML-Datei von Darstellungszeichendaten, die in den Informationen enthalten sind, die von dem Netzwerkserver übertragen werden, und URL-Daten, und zum Darstellen der HTML-Datei auf einem Endgerät.

15. Das computerlesbare Speichermedium nach Anspruch 14, wobei die HTML-Datei ein Einmal-Klick-Doppel-Aktions-Programm enthält, das Bearbeitung zum Verbinden zu einer bestimmten URL und Bearbeitung zum Übertagen eines Klick-Signals über eine bestimmte URL umfasst.

## Revendications

1. Système de diffusion d'informations pour un système de messagerie instantanée comprenant un serveur principal (11) comportant une section de serveur de transactions de messages (120) et une section de diffusion d'informations et un terminal réseau (100, 140) ayant une section de commande de transactions de messages et une section de commande d'informations, dans lequel
ladite section de serveur de transactions de messages (120) comprend :
une section de stockage d'identifiants ID (131) pour y stocker des identifiants ID d'abonnés ;
une section de détermination d'identifiants ID (132) pour déterminer, lorsqu'un utilisateur accède au système, si l'utilisateur est un abonné ou non ;
une section d'analyse d'adresses IP (133) pour analyser une adresse IP attribuée au terminal accédant pour les connexions courantes ; et
une section de surveillance d'ouverture de session (134) pour contrôler une relation entre un identifiant ID de l'abonné ouvrant actuellement une session, une adresse IP de l'abonné et un canal ;
ladite section de diffusion d'informations comprend :
une section de stockage d'informations (601) pour y stocker des informations telles que des annonces ou des nouvelles comportant au moins des données de caractères d'affichage ;
une section de stockage d'informations d'attributs d'abonné (602) pour y stocker des informations d'attributs relatives aux abonnés enregistrés ; et
une section de sélection d'informations (603) pour sélectionner des informations telles que des annonces ou des nouvelles basées sur les informations d'attributs relatives à l'abonné ;
ladite section de commande de transactions de messages (100, 140) comprend :
une section de retenue d'identifiants ID (111, 151) pour y retenir respectivement des identifiants ID attribués aux abonnés ; et
une section de conversion d'adresses IP (112, 152) pour y stocker temporairement une adresse IP attribuée aux abonnés pendant le mode en ligne jusqu'à ce que le mode non connecté soit effectif ;
et ladite section de commande d'informations comprend :
une section de stockage d'informations (511) pour stocker des informations telles que des annonces ou des nouvelles émises par le serveur principal ; et
une section de stockage d'informations de caractères (512) pour stocker des données de caractères d'affichage incluses dans lesdites informations.

2. Système de diffusion d'informations selon la revendication 1, dans lequel ladite section de diffusion d'informations comprend en outre :
une section d'historique des diffusions pour y stocker des données d'historique des informations diffusées vers chaque abonné ; et
une section de détermination de diffusion pour déterminer si, oui ou non, les informations sont diffusées sur la base des données d'historique.

3. Système de diffusion d'informations selon la revendication 1 ou 2, dans lequel ladite section de commande d'informations comprend en outre :
une section de stockage d'URL (513) pour y stocker des données d'URL incluses dans des informations émises par le serveur principal ;
une section de création d'HTML (515) pour créer un fichier HTML à partir des données de caractères d'affichage stockées et des données d'URL stockées ;
une section de stockage d'HTML (516) pour y stocker les fichiers HTML ; et
une section d'activation d'explorateur (517) servant à activer automatiquement un explorateur pour afficher le fichier HTML sur un écran.

4. Système de diffusion d'informations selon l'une quelconque des revendications 1 à 3, dans lequel ladite section de commande d'informations comprend en outre une section de détermination de nombres d'affichages (514) pour y stocker des données relatives aux nombres d'affichages inclus dans des informations émises par le serveur principal et déterminer le nombre de fois que les informations ont été affichées.

5. Serveur principal pour un système de messagerie instantanée ayant une section de serveur de transactions de messages (120) et une section de diffusion d'informations, dans lequel
ladite section de serveur de transactions de messages (120) comprend :
une section de stockage d'identifiants ID (131) pour y stocker des identifiants ID d'abonnés ;
une section de détermination d'identifiants ID (132) pour déterminer, lorsqu'un utilisateur accède au système, si l'utilisateur est un abonné ou non ;
une section d'analyse d'adresses IP (133) pour analyser une adresse IP attribuée à un terminal accédant pour les connexions courantes ; et
une section de surveillance d'ouverture de session (134) pour contrôler une relation entre un identifiant ID de l'abonné ouvrant actuellement une session, une adresse IP de l'abonné et un canal ;
ladite section de diffusion d'informations comprend :
une section de stockage d'informations (601) pour y stocker des informations telles que des annonces ou des nouvelles comportant au moins des données de caractères d'affichage ;
une section de stockage d'informations d'attributs d'abonné (602) pour y stocker des informations d'attributs relatives aux abonnés enregistrés ;
une section de sélection d'informations (603) pour sélectionner des informations telles que des annonces ou des nouvelles basées sur les informations d'attributs relatives à l'abonné ; et
une section d'émission (127) pour émettre les informations vers le terminal.

6. Serveur principal selon la revendication 5, dans lequel ladite section de diffusion d'informations comprend en outre :
une section d'historique des diffusions pour y stocker des données d'historique des informations diffusées vers chaque abonné ; et
une section de détermination de diffusion pour déterminer si, oui ou non, les informations sont diffusées sur la base des données d'historique.

7. Terminal réseau pour un système de messagerie instantanée comportant une section de commande de transactions de messages et une section de commande d'informations, ladite section de commande de transactions de messages (100, 140) comprend :
une section de retenue d'identifiants ID (111, 151) pour y retenir respectivement des identifiants ID attribués aux abonnés ; et
une section de conversion d'adresses IP (112, 152) pour y stocker temporairement une adresse IP attribuée aux abonnés pendant le mode en ligne jusqu'à ce que le mode non connecté soit effectif de sorte que les messages puissent directement faire l'objet d'une transaction entre terminaux ;
et ladite section de commande d'informations comprend :
une section de stockage d'informations (511) pour stocker des informations telles que des annonces ou des nouvelles émises par un serveur principal ; et
une section de stockage d'informations de caractères (512) pour stocker des données de caractères d'affichage incluses dans lesdites informations.

8. Terminal réseau selon la revendication 7, dans lequel ladite section de commande d'informations comprend en outre :
une section de stockage d'URL (513) pour y stocker des données d'URL incluses dans des informations émises par le serveur principal ;
une section de création d'HTML (515) pour créer un fichier HTML à partir des données de caractères d'affichage stockées et des données d'URL stockées ;
une section de stockage d'HTML (516) pour y stocker les fichiers HTML ; et
une section d'activation d'explorateur (517) servant à activer automatiquement un explorateur pour afficher le fichier HTML sur un écran.

9. Terminal réseau selon l'une quelconque des revendications 7 ou 8, dans lequel ladite section de commande d'informations comprend en outre une section de détermination de nombres d'affichages (514) pour y stocker des données relatives aux nombres d'affichages inclus dans des informations émises par le serveur principal et déterminer le nombre de fois que les informations ont été affichées.

10. Procédé de diffusion d'informations pour un système de messagerie instantanée, dans lequel un serveur principal ayant reçu un signal de demande de connexion de la part d'un terminal (100) à travers un réseau comprenant le serveur principal (120) et une pluralité de terminaux (100, 140) communiquant les uns avec les autres à travers un réseau envoie des informations d'adresses IP courantes du terminal et/ou d'un autre terminal communiquant avec le terminal à ces terminaux de sorte que des messages puissent directement faire l'objet de transaction entre les deux terminaux ayant échangé les informations d'adresses IP entre eux ; le serveur principal sélectionne des informations telles que des annonces ou des nouvelles stockées dans le serveur principal en se basant sur les attributs des abonnés faisant fonctionner les terminaux ; et les informations sont diffusées, en continu ou par intermittence, vers les terminaux alors que le terminal est maintenu connecté dans le mode en ligne.

11. Support de stockage lisible sur ordinateur stockant un jeu d'instructions qui, lorsqu'elles sont exécutées par un ordinateur, amènent l'ordinateur à exécuter une messagerie instantanée à la suite d'une demande de connexion de la part d'un terminal réseau (100) entre le terminal (100) et un autre terminal (140) communiquant l'un avec l'autre à travers un réseau de sorte que des messages puissent directement faire l'objet d'une transaction entre les deux terminaux (100, 140) ayant échangé des informations d'adresses IP entre eux, sélectionnant des informations telles que des annonces ou des nouvelles stockées dans un serveur de réseau en analysant des attributs d'abonnés préalablement enregistrés faisant fonctionner actuellement les terminaux, et diffusant les informations, en continu ou par intermittence, vers les terminaux alors que les terminaux sont maintenus connectés dans le mode en ligne.

12. Support de stockage lisible sur ordinateur selon la revendication 11 dans lequel est enregistré un programme pour effectuer, en plus des opérations ci-dessus, la réception d'informations de projet d'annonce rédigées émises par un terminal serveur de parrain et d'informations de paiement émises par un terminal réseau dans une banque et un collationnement entre les deux types d'informations reçues.

13. Support de stockage lisible sur ordinateur selon la revendication 11, stockant un jeu d'instructions qui, lorsqu'elles sont exécutées par l'ordinateur, amènent l'ordinateur à exécuter simultanément un traitement pour afficher l'arrivée d'un message dans une messagerie instantanée sur le terminal réseau et un traitement pour afficher des informations telles que des annonces ou des nouvelles émises par le serveur de réseau sur ledit terminal réseau.

14. Support de stockage lisible sur ordinateur selon la revendication 13 dans lequel est enregistré un programme pour créer un fichier HTML à partir de données de caractères d'affichage incluses dans les informations émises par le serveur de réseau et à partir de données d'URL, et pour afficher le fichier HTML sur un terminal.

15. Support de stockage lisible sur ordinateur selon la revendication 14, dans lequel ledit fichier HTML inclut un programme à un seul clic et double action comprenant un traitement pour se connecter à une URL particulière et un traitement pour émettre un signal de clic concernant l'URL particulière.
